# EUROPEAN PATENT APPLICATION

(11) **EP 0 717 176 A1**
(43) Date of publication of application: **19.06.1996**
(21) Application number: 95203090.6
(22) Date of filing: 13.11.1995
(51) Int. Cl.: F01N 3/02, F01N 7/08, F01N 3/32, F01P 1/02, F01P 5/06

(54) **Forced air exhaust treatment**

(30) Priority: 12.12.1994 US 353743
(71) Applicant: GENERAL MOTORS CORPORATION, Detroit Michigan 48202 (US)
(72) Inventor: De Minco, Christopher Mark, Honeoye Falls, New York 14472 (US); Faville, Michael Thomas, Geneseo, New York 14454 (US); O'Connell, Daniel Bradley, Rochester, New York 14612 (US)
(74) Representative: Denton, Michael John

(57) **Abstract**

The invention includes a small engine (10) having a flywheel (16) operatively connected to turn as the engine (10) turns. Louvered fins (18) on the flywheel (16) act as a fan to compress air and provide a pressurized air supply. Ducting (20) around the flywheel (16) directs the pressurized air past engine block fins (14) to cool the engine (10). High temperature exhaust gas leaves the engine (10) through an exhaust manifold (22) and passes through a venturi (24). Continued shrouding (20) directs the pressurized air from the flywheel (16) into the venturi (24) and mixes with the exhaust gas before entering the catalytic converter (26). The remaining pressurized air flows around the catalytic converter housing and acts as an insulator/heat transfer agent for the high catalytic converter temperatures. A mixing chamber (28) after the catalytic converter (26) allows the additional pressurized air and exhaust gas to mix before being released out the tailpipe (36) to the atmosphere at acceptable temperature.

## Description

### Field of the Invention

This invention relates to a system and products using forced air exhaust treatment, and more particularly to forced air exhaust treatment for small engine applications.

### Background of the Invention

Currently, government regulations require control of exhaust temperatures, and in the near future will require control of emissions and evaporative emissions from small engines. To meet the emission's standards, catalytic converters will be added to small engine devices. These catalytic converters operate most efficiently at high temperatures and produce a corresponding high temperature exhaust. Further, the catalytic converters operate at peak efficiency within a specified air-to-fuel ratio and within a specified temperature range. If the engine intake, and resulting exhaust, air-to-fuel control is not capable of maintaining the specified ratio in the exhaust, then the emission levels will increase as the converter efficiency is decreased. Unfortunately, peak engine performance is obtained with richer air-to-fuel ratios then the air-to-fuel ratio that is needed for optimum catalytic converter efficiency. Heretofore, no system has been developed to address these unique and often conflicting performance requirements.

The present invention overcomes many of the deficiencies of the prior art.

### SUMMARY OF THE INVENTION

The invention includes a small engine having a flywheel operatively connected to turn as the engine turns. Louvered fins on the flywheel act as a fan to compress air and provide a pressurized air supply. Ducting around the flywheel directs the pressurized air past engine block fins to cool the engine. High temperature exhaust gas leaves the engine through an exhaust manifold and passes through a mechanical or electrical controllable venturi. Continued shrouding around the engine and manifold directs the pressurized air from the flywheel into the control venturi and mixes with the exhaust gas before entering the catalytic converter. The remaining pressurized air flows around the catalytic converter housing and acts as an insulator/heat transfer agent for the high catalytic converter temperatures. A mixing chamber after the catalytic converter allows the additional pressurized air and exhaust gas to mix before being released out the tailpipe to the atmosphere at acceptable temperature.

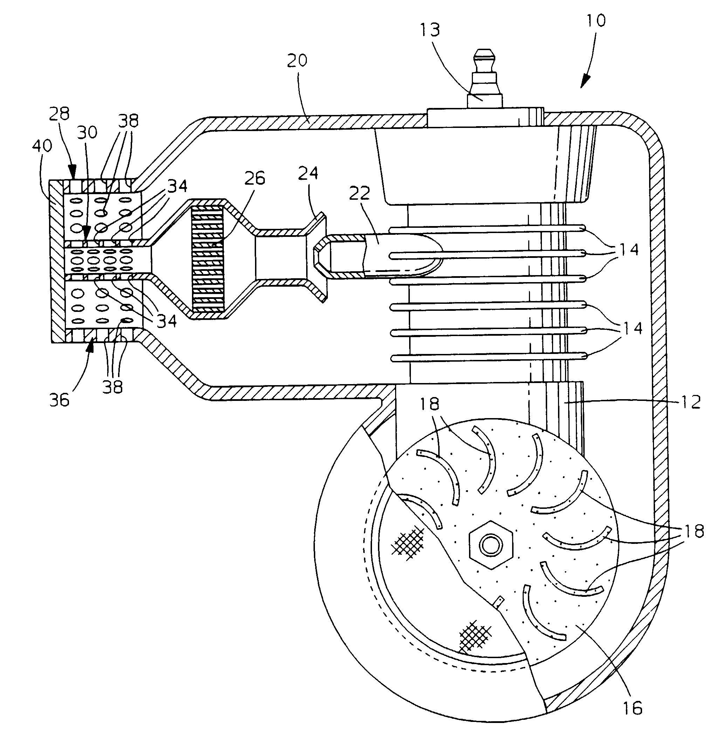

These and other objects, features and advantages of the present invention will be apparent from the following brief description of the drawing, detailed description and appended claims and drawing.

### Brief Description of the Drawing

The Drawing is a single view illustrating a forced air exhaust treatment system for a small engine according to the present invention.

### Detailed Description

The Drawing illustrates a forced air exhaust treatment system for a small engine application according to the present invention. The system includes a small engine 10, preferably 0.1 HP to less than 25 HP, which includes an engine block 12 defining an engine cylinder and carrying a piston (not shown), and including a spark plug 13. Preferably the engine block includes fins 14 on the outer surface thereof for cooling the engine. A flywheel 16 is operatively connected to the engine so that the flywheel turns as the engine turns. Louvered fins 18 are positioned on the flywheel which act as a fan to compress air as the engine operates. Ducting 20 is provided around the flywheel and fins to direct pressurized air past the engine block fins 14 to cool the engine. An exhaust manifold 22 is operably connected to the engine for collecting high temperature exhaust gases from combustion of the engine fuel. The high temperature exhaust gases are directed through the exhaust manifold 22 and into a calibratable or mechanical controllable venturi 24. Continued shrouding or ducting 20 is provided around the engine so that pressurized air may be feed into the venturi and mixed with exhaust gas before the exhaust gas enters a catalytic converter 26. Alternatively, ducting 20 may be provided to go direct from the flywheel to the venturi 24 or to the mixing chamber described hereafter.

An outer housing or ducting 20 is provided which surrounds and carries the catalytic converter. The outer housing may be formed from sheet metal or other suitable material and allows additional pressurized air to flow around the catalytic converter. A mixing chamber 28 is provided after the catalytic converter and allows the additional pressurized air to mix with the exhaust gas prior to discharge through a tailpipe 36. An exhaust pipe 30 is connected to the catalytic converter 26. The exhaust pipe 30 has holes 34 formed therein to allow for radial flow of exhaust gases. A tailpipe 36 surrounds the exhaust pipe 30 and defines the mixing chamber 28. The tailpipe 36 has holes 38 formed therein for radial flow of the mixed exhaust gas and additional pressurized air. A plug 40 blocks flow through one end of the exhaust pipe 30 and the tailpipe 36. The mixing of the additional pressurized air with the exhaust leaving the catalytic converter lowers the temperature of the exhaust to an acceptable temperature for small engine applications such as hand tools like power trimmers, weed whackers, blowers, and lawn mowers.

## Claims

1. A small engine system comprising:
a combustion engine having a flywheel operatively connected thereto so that the flywheel turns as the engine turns, and louvered fins connected to the flywheel to produce pressurized air as the engine operates;
ducting surrounding the flywheel and fins, and constructed and arranged to direct pressurized air past the engine;
an exhaust manifold operatively connected to the engine for collecting exhaust gas and communicating with a catalytic converter;
an outer housing surrounding the catalytic converter and communicating with the ducting so that air will be directed around the catalytic converter;
a mixing chamber in communication with the outer housing and an exhaust outlet from the catalytic converter so that exhaust gas and the pressurized air are mixed to lower the temperature of the mixture prior to release from a tailpipe communicating with the mixing chamber.

2. A small engine system as set forth in claim 1 further comprising a venturi operatively connected to the catalytic converter and communicating with the exhaust manifold and the outer housing so that pressurized air and exhaust from the combustion engine enter the catalytic converter.

3. A small engine system as set forth in claim 1 wherein the exhaust from the catalytic converter and the pressurized air are mixed sufficiently in the mixing chamber so that the mixture has a temperature less than 375 degrees as the mixture leaves the tailpipe.

4. A small engine system as set forth in claim 2 wherein the engine has a 0.1 HP to 25 HP rating.

5. An engine system comprising:
a combustion engine having a flywheel operatively connected thereto so that the flywheel turns as the engine turns, fins connected to the flywheel to produce pressurized air as the engine operates;
an exhaust manifold operatively connected to the engine for collecting exhaust gas and communicating with a catalytic converter;
ducting surrounding the flywheel and communicating with the catalytic converter to deliver pressurized air to the catalytic converter.

6. An engine system as set forth in claim 5 further comprising a venturi operatively connected to the catalytic converter and communicating with the exhaust manifold, and wherein the pressurized air is delivered to the catalytic converter through the venturi.

7. A small engine system comprising:
a combustion engine having a flywheel operatively connected thereto so that the flywheel turns as the engine turns, and fins connected to the flywheel to produce pressurized air as the engine operates;
an exhaust pipe operatively connected to the engine and communicating with a mixing chamber;
ducting surrounding the flywheel and communicating with the mixing chamber to provide pressurized air to the mixing chamber where the pressurized air is mixed with exhaust from the exhaust pipe.

8. A small engine system as set forth in claim 7 further comprising a tailpipe surrounding a portion of the exhaust pipe so that the mixing chamber is defined by the tailpipe and said portion of the exhaust pipe.

9. A small engine system as set forth in claim 8 wherein said portion of said exhaust pipe has holes formed therein to allow exhaust gas to flow into the mixing chamber.

10. A small engine systems as set forth in claim 8 wherein the exhaust pipe and the tailpipe are plugged at one end of each, and the tailpipe and said portion of the exhaust pipe have holes formed in each to allow exhaust gas to flow out of the exhaust pipe and form a mixture with pressurized air in the mixing chamber and so that the mixture flows out of the holes in the tailpipe.

11. An engine system as set forth in claim 6 wherein said venturi is mechanically or electrically controllable.
